# EUROPÄISCHE PATENTSCHRIFT

(11) **EP 1 241 140 B1**
(45) Veröffentlichungstag und Bekanntmachung des Hinweises auf die Patenterteilung: **14.05.2008**
(21) Anmeldenummer: 02450055.5
(22) Anmeldetag: 11.03.2002
(51) Int. Cl.: C02F 5/00, C02F 1/74, C02F 1/66, C02F 1/52, C02F 11/14, C02F 5/08, C02F 1/20

(54) **Verfahren zur Vermeidung und Beseitigigung von Inkrustationen bei der Förderung und Ableitung von Flüssigkeiten**
Process for reducing scaling while collecting and drawing off water
Procédé pour la réduction d'entartrage dans la réception et l'évacuation d'eau

(30) Priorität: 12.03.2001 DE 10112934
(43) Veröffentlichungstag der Anmeldung: 18.09.2002
(73) Patentinhaber: Richter, Ewald, 15827 Blankenfelde (DE)
(72) Erfinder: Richter, Ewald, Dipl.Chem., 15827 Blankenfelde (DE); Lengemann, Andreas, Dipl.Ing., 15366 Neuenhagen (DE)
(74) Vertreter: Hengelhaupt, Jürgen

(56) Entgegenhaltungen:
- DE-A- 10 002 660
- GB-A- 1 567 467
- US-A- 4 614 596
- US-A- 5 879 651

## Beschreibung

Die Erfindung betrifft ein Verfahren zur Vermeidung und Beseitigung von Inkrustationen durch anorganische Ablagerungen bei laufendem Betrieb der Anlagen bei der Förderung und Ableitung von Flüssigkeiten, beispielsweise von Trinkwasser-, Brauchwasser- und Abwasser, insbesondere von Faulschlammwasser, das bei der Klärschlammentwässerung anfällt.

Das Trinkwasser, Brauchwasser, Abwasser und die Schlammwässer aus Kläranlagen stehen in der Regel mit dem in den Wässern gelöstem Kohlendioxid im Gleichgewicht. Werden diese Wässer Druckschwankungen ausgesetzt, beispielsweise durch die Wasserentnahme, Pumpen, Veränderungen der Oberfläche und Entwässerung von Klärschlämmen, entweicht Kohlendioxid unter Erhöhung des pH-Wertes. Durch das Ausgasen von Kohlendioxid wird das Kohlensäuregleichgewicht gestört. Aus Hydrogenkarbonat wird unter Aufnahme eines Wasserstoffions Wasser und Kohlendioxid. Der Anstieg des pH-Wertes wiederum bewirkt die Erhöhung der Konzentration von Anionen, wie Karbonationen, Hydrogenphosphationen und Phosphationen, da die Lage der entsprechenden Säuregleichgewichte verändert wird. Stehen Metallionen, wie Kalziumionen, Magnesiumionen und Eisenionen, mit diesen Anionen im Fällungsgleichgewicht, sind Fällungen der entsprechenden Karbonate und Phosphate möglich. Die Fällungsprodukte kristallisieren bei Wässern mit geringem Schwebstoffgehalt oder Feststoffgehalt bevorzugt an den Wandungen von Rohrleitungen, Pumpen sowie kleinen Behältern.

Fällungen werden bei konzentrierten Faulschlammwässern auch durch eine Verringerung der lonenstärke nach Zusatz von Polyelektrolytlösung oder Betriebswasser induziert. Die geringere lonenstärke des Faulschlammwassers nach Zusatz der Polyelektrolytlösung bewirkt unter Umständen eine Erhöhung der wirksamen Konzentration von Ionen, obwohl die Konzentrationen durch die Verdünnung leicht sinken. Auch das Gleichgewicht von im Faulschlammwasser durch Komplexbildner gebundene Kalzium- und Magnesiumionen wird gestört, so daß die wirksamen Konzentrationen steigen.

Die Bildungsgeschwindigkeit von Inkrustationen an Oberflächen ist neben der Höhe der Änderung des pH-Wertes noch von anderen Faktoren, wie Scherkräfte an Oberflächen, Feststoffgehalt der Flüssigkeit und Strömungsgeschwindigkeit der Flüssigkeit, abhängig. Die Maßnahmen gegen Inkrustationen werden in der Regel durch ihre Bildungsgeschwindigkeit bestimmt.

Bekannte Maßnahmen gegen Inkrustationen sind mechanisches Entfernen nach Außerbetriebnahme der Leitungen, mechanisches Entfernen bei laufendem Betrieb und der Einsatz von verdünnten Säuren zum Auflösen der anorganischen Ablagerungen nach Außerbetriebnahme (Sonderdruck Steve Williams Thames Water Utilities Ltd. Spencer House, Manor Farm Road, Reading, RG OJN: Adapting Strategies for avoiding struvite Build-up in plants and transforming them into strategies for recovery, S. 1 bis 7).

Wird eine häufige Außerbetriebnahme notwendig, muß das Leitungssystern redundant ausgeführt werden.

In Brauchwassersystemen und in Anlagen zur Förderung und Ableitung von Klärschlammwässem, welche nach der Abtrennung der Feststoffe vom Klärschlamm anfallen, ist der Einsatz verschiedenartiger chemischer Mittel üblich, die Kalzium und Magnesium chemisch binden und gleichzeitig von den sich bildenden Kristallen adsorbiert werden und damit das Kristallwachstum hemmen, Dafür geeignet sind Natriumacrylat-Acrylamid-Copolymere und andere Produkte, die Mischungen ähnlich wirkender Substanzen darstellen..

Diese Mittel können je nach Dosiermenge auf den Prozeß der Klärschlammentwässerung einen Einfluß haben. Die Produkte oder deren Abbauprodukte werden vom Schlamm adsorbiert. Die Wirkungen des bei der Klärschlammentwässerung verwendeten Polyelektrolyts werden eingeschränkt, da die notwendige Adsorption des Polyelektrolyts am Schlamm sterisch behindert wird.

Des Weiteren gelangen Produkte oder deren Abbauprodukte in den Schlammkreislauf und binden Kalzium und Magnesium. Damit werden Fällungen von Magnesiumammoniumphosphat, Kalziumphosphat und Kalziumkarbonat bereits im Faulturm verhindert. Der für die Entwässerbarkeit des Faulschlamms notwendige anorganische Anteil höherer Dichte als der organische Anteil wird vermindert. Um eine gleiche oder ähnliche Entwässerbarkeit zu erreichen, muß dann mehr Polyelektrolyt eingesetzt werden. Nachteilig hierbei ist, daß bei Anwendung dieser Mittel und bei Anwendung des Verfahrens der biologischen Phosphatentfernung bei der Abwasserreinigung die Konzentration löslicher Phosphate im Faulschlammwasser erhöht wird.

Zur Verbesserung der Entwässerungsfähigkeit von Klärschlämmen sind verschiedene Verfahren bekannt. Die meisten Verfahren beruhen auf dem Einsatz von Metallsalzlösungen, meist Eisensalzlösungen, mit Kalk oder einer Kombination dieser Produkte mit organischen Flockungshilfsmitteln (awt Abwassertechnik 1/1985 Daucher, H.-H., Sander, B.H.F.: Entwässerung von Klärschlämmen unter Verwendung von Polyelektrolyten, S. 4 bis 8; Korrespondenz Abwasser; 6/1991 Wolf, P., Fuhrmann, L., Schmidt, C.-M.: Versuche zur kombinierten Polymer-Kalk-Konditionierung vor der Faulschlamment-wässerung mit Kammerfilterpressen, S. 806 bis 810).

In der Veröffentlichung DE 40 25 063 A1 wird zur Verbesserung der Entwässerungsfähigkeit von Schlämmen der Einsatz von Schichtsilikaten vorgeschlagen.

Nach der Schrift DE 196 29 723 C1 wird Klärschlamm mit Eisen-III-chlorid und Kalkmilch verrührt und anschließend vor Zugabe von Schichtsilikat mit Magnesiumsulfat bei einem pH-Wert von mindestens 8 vermischt. Nach der Dosierung von Polyelektrolyt wird der Schlamm bei einem pH-Wert von mindestens 8 in den Zentrifugen oder Pressen entwässert. Durch diese Verfahrensschritte soll die Entwässerungsfähigkeit des Klärschlamms verbessert und der Schwermetallgehalt im Schlamm gesenkt werden.

Des Weiteren wird nach der DE 196 39 716 A1 Klärschlamm mit einer Eisen-II-salzlösung zusammen mit Säure und Wasserstoffperoxid vermischt. Der pH-Wert soll dabei zwischen 2 und 6 betragen. Durch dieses Verfahren werden unerwünschte Gerüche beseitigt und die Filtrierbarkeit der Schlämme verbessert.

In der Veröffentlichung DE 33 00 544 A1 wird Faulschlamm mit oxidierend wirkenden Chemikalien, Wasserstoffperoxid, Peroxihydrate oder Permanganat, durch elektrochemische Anhebung des Redoxpotentials sowie durch Begasung mit Luft oder reinem Sauerstoff unter Zusatz von Ozon mit dem Ziel behandelt, die Entwässerungsfähigkeit des Faulschlammes zu erhöhen.

Die bekannten Verfahren haben den Nachteil, daß Eisensalziösungen und auch Kalk verwendet werden. Der Zusatz dieser Stoffe erhöht nicht unerheblich den Schlammanfall und damit die Entsorgungskosten. Der vorgeschlagene Einsatz von Säure, von Wasserstoffperoxid und auch Ozon erhöht weiter die Kosten für die Dosieranlangen und die Chemikalien.

Eine Veränderung des pH-Wertes wirkt auf die Entwässerungsfähigkeit der organischen Matrix von Klärschlämmen. Niedrige pH-Werte, kleiner als 7, begünstigen die Entwässerungsfähigkeit. Hohe pH-Werte, größer als 7,6, verschlechtern die Entwässerungsfähigkeit. Durch den vermehrten Einsatz von anorganischen Chemikalien wie in der DE 196 39 716 A1 vorgeschlagen, wird dieser Effekt kompensiert.

Die oxidative Behandlung mit Luft entsprechend der Schrift DE 33 00 544 A1 bewirkt immer eine Erhöhung des pH-Wertes, da gelöstes Kohlendioxid ausgestrippt wird. Wird dabei die Dichte der anorganischen Matrix, durch Fällungen von schwerlöslichen Verbindungen aus dem Schlammwasser nur unwesentlich erhöht, kann die Entwässerungsfähigkeit sogar leicht schlechter werden.

Aufgabe der Erfindung ist es, ein Verfahren zur Vermeidung und Beseitigung von Inkrustationen in Anlagen zur Förderung und Ableitung von Flüssigkeiten, insbesondere von Faulschlammwasser bei Veränderung der Zusammensetzung des Feststoffgehaltes im entwässerten Faulschlamm und Senkung des Verbrauches von Hilfsstoffen bei der Faulschlammentwässerung, anzugeben.

Erfindungsgemäß wird die Aufgabe dadurch gelöst, daß in Fließrichtung vor der Faulschlammentwässerung Kohlendioxid bei gleichzeitiger Dosierung von Metallsalzlösungen und Veränderung von Zusammensetzung der Feststoffe im Faulschlammwasser entfernt wird.

Im Faulschlammwasser ist Hydrogenkarbonat in einer Konzentration von ungefähr 0,1 mol/l gelöst. Beim Zusatz von sauren Metallsalzlösungen wird der pH-Wert gesenkt. Aus dem Hydrogenkarbonat wird entsprechend des pH-Wertes Kohlendioxid.

Die Entfernung des Kohlendioxids erfolgt unter Belüftung. Die Belüftung hat den Vorteil, daß bei der bisher üblichen Kombination des Einsatzes saurer Eisenverbindungen mit Kalk zur Verbesserung der Entwässerungsfähigkeit von Klärschlamm auf den Einsatz von Kalk zur Anhebung des pH-Wertes verzichtet wird.

Die Belüftung erfolgt diskontinuierlich oder kontinuierlich in einem Behälter oder in Behälterkaskaden. Der Luftbedarf ist beim diskontinuierlichen Verfahren am niedrigsten, da bei Beginn der Belüftung bei einem niedrigen pH-Wert die Kohlendioxidkonzentration im Schlammwasser am höchsten ist. Der Gasaustausch zwischen Wasser und Luft findet am Anfang, deshalb relativ schnell, statt. Von Nachteil ist die Emission von Schwefelwasserstoff bei Beginn der Belüftung.

Bei einem kontinuierlichen Prozeß in einem Behälter entspricht die Kohlendioxidkonzentration im Zulauf der Kohlendioxidkonzentration vom Ablauf. Diese ist damit niedriger als bei einem diskontinuierlichen Prozeß. Der Gasaustausch findet deshalb langsamer statt. Die Folge ist ein höherer Luftbedarf. Emissionen von Schwefelwasserstoff werden nicht gemessen. Der Nachteil des höheren Luftbedarfs wird bei der Belüftung in Behälterkaskaden vermindert.

Als Metallsalzlösungen werden zwei- oder dreiwertige Eisensalze, Aluminiumsalze oder Magnesiumsalze verwendet.

Nach der Faulschlammentwässerung wird anschließend vor oder nach den Stellen im System, an welchen Erhöhungen des pH-Wertes stattfinden, bei laufendem Betrieb in das Faulschlammwasser Säure dosiert.

Die dadurch erzielte Verminderung des pH-Wertes bewirkt, daß die Konzentration von den an den Fällungsprozessen beteiligten Anionen wie Karbonationen, Hydrogenphosphationen, Phosphationen nicht ansteigt. Fällungen werden somit vermieden. Bei geringfügig höherer Dosierung der Säure werden sogar vorhandene Inkrustationen bei laufendem Betrieb der Anlage langsam aufgelöst.

Die notwendige Änderung des pH-Wertes zur Vermeidung oder Auflösung von Inkrustationen beträgt in den meisten Anwendungsfällen 0,05 bis 1,0 Einheiten des pH-Wertes.

Bei der Dosierung wird für eine gute Vermischung der Säure mit den Wässern gesorgt. Die notwendige Dosiermenge wird empirisch ermittelt, da eine Berechnung von Karbonatgleichgewichten erst nach einer aufwendigen Analyse der Wässer möglich ist. Nur bei kristallinen Fällungen, wie von Magnesiumammoniumphosphat im Faulschlammzentratwässern von Kläranlagen mit biologischer Phosphatentfernung, wird nach Analyse der Konzentrationen von Magnesium, von ortho-Phosphat-Phosphor und von Ammoniumstickstoff bei unterschiedlichen Dosiermengen von Säure eine notwendige Dosiermenge mathematisch ermittelt.

Weitere Dosierstellen im Fließweg der Wässer sind notwendig, wenn nach längerer Aufenthaltszeit in Zwischenspeichern Kohlendioxid erneut ausgast.

Die Einstellung des pH-Wertes bei der Belüftung durch Veränderung der Luftmenge oder der Aufenthaltszeit hat Einfluß, auf die Gesamtkosten der Kombination der Verfahren Belüftung und Dosierung von Säure in das Faulschlammwasser. Ein hoher pH-Wert bei der Belüftung vermindert die Kosten bei der Säuredosierung, erhöht aber gleichzeitig die Kosten bei der Belüftung und erhöht unter ungünstigen Umständen auch die Kosten bei der Schlammentwässerung. Der optimale pH-Wert mit den niedrigsten Kosten wird deshalb empirisch ermittelt, da die Schlammeigenschaften bei der Entwässerung sowie die Höhe der Änderungen der pH-Werte bei der Schlammentwässerung und bei der Förderung und Ableitung der Schlammwässer nur bedingt prognostizierbar sind.

Des weiteren ist die pH-Werteinstellung von der Wertigkeit der Metallsalzlösungen abhängig. Bei dreiwertigen Metallsalzen liegt der pH-Wert im Bereich von 6,9 bis maximal 8 und bei zweiwertigen Metallsalzen liegt dieser im Bereich von 7,4 bis maximal 8.

Zur Erhöhung des pH-Wertes durch Belüftung werden bei zu geringer Hydrogenkarbonatkonzentration zusätzlich Karbonate und/oder Hydrogenkarbonate dosiert.

Die Art und Menge der Säuredosierung ist abhängig von der Anwendung des erfindungsgemäßen Verfahrens in bezug auf die Bestimmung der Flüssigkeiten, die sowohl Faulschlammwasser-, Trink- und Brauchwasser sind.
Alternativ wird die Belüftung des Faulschlammes mit einem Verfahren der Drukkentspannung des Faulschlammes zur Senkung der Kosten bei der Belüftung kombiniert. Das Verfahren der Druckentspannung weist jedoch einige Nachteile auf.

Eine weitere Ausgestaltung des erfindungsgemäßen Verfahrens wird dadurch bestimmt, daß die Verfahrensschritte vor oder nach der Faulschlammentwässerung auch getrennt durchgeführt werden.

Vorteile des erfindungsgemäßen Verfahrens sind, die Erhöhung der Dichte des anorganischen Anteils im Faulschlamm durch Fällungen aus dem Schlammwasser und oder Umfällungen am Schlamm zur Verbesserung der Entwässerbarkeit des Faulschlammes, die Umsetzung löslicher und unlöslicher Sulfide im Schlammwasser und im Feststoff zu Schwefelverbindungen höherer Oxydationsstufe mit dem Ziel der Verminderung der Emission von Schwefelwasserstoff aus dem entwässerten Schlamm und dem Schlammwasser; die Umsetzung von Eisen-II-verbindungen im Schlammwasser und im Schlamm zu Eisen-III-verbindungen mit dem Ziel der Senkung der Konzentration löslicher Phosphate im Schlammwasser und die Einstellung eines für die Entwässerbarkeit des Faulschlammes optimalen pH-Wertes durch Änderung der Luftmenge und oder der Aufenthaltszeit.

Die Erfindung soll nachstehend anhand der folgenden Beispiele, die sich durch die Herkunft des Faulschlammes unterscheiden, beschrieben werden:

### 1. Faulschlamm aus Anlagen ohne Phosphatentfernung aus dem Abwasser:

Der Faulschlamm wird unter Zusatz einer Lösung von Eisensalzen belüftet. Der pH-Wert beträgt vorzugsweise 6,9 bis 7,5. Bei Bildung von Magnesiumammoniumphosphat wird der Schlamm unter Dosierung von 10 mol bis 15 mol löslicher Magnesiumverbindungen je m³ Faulschlamm belüftet. Der pH-Wert beträgt vorzugsweise 7,5 bis 8. Da die Fällungsprozesse und Umfällungsprozesse zeitabhängige Reaktionen sind, wird der Schlamm etwa 2 bis 4 Stunden lang belüftet. Dadurch wird die Entwässerungsfähigkeit des Faulschlamms verbessert und die Emission von Schwefelwasserstoff vermindert.

### 2. Faulschlamm aus Anlagen mit chemischer Phosphatentfernung aus dem Abwasser:

Der Faulschlamm wird gegebenenfalls unter Zusatz einer Lösung von Eisensalzen belüftet. Der pH-Wert beträgt vorzugsweise 6,9 bis 7,5. Die Belüftung bewirkt, daß Sulfide zu Schwefelverbindungen höherer Oxydationsstufe umgesetzt werden. Gleichzeitig werden Eisen-II-verbindungen zu Eisen-IIIverbindungen oxidiert. Deshalb werden im Schlammwasser gelöste Phosphate als Eisenphosphat gefällt. Wenn sich im Prozeß der Faulung amorphe Kalziumphosphate geringer Dichte bilden, werden diese somit zu Kalziumkarbonat und Eisenphosphat umgefällt. Damit wird ebenfalls die Entwässerungsfähigkeit des Faulschlammes verbessert und die Emission von Schwefelwasserstoff vermindert.

### 3. Faulschlamm aus Anlagen mit biologischer Phosphatentfernung aus dem Abwasser:

Die Phosphate sind im Faulschlamm als amorphe Kalziumphosphate und Magnesi-umammoniumphosphat gebunden. Dieser Faulschlamm ist schlecht entwässerbar, da der Anteil amorpher Kalziumphosphate geringer Dichte überwiegt. Der Faulschlamm wird deshalb unter Dosierung von ca. 10 mol bis 15 mol gelöster Magnesiumverbindungen je m³ Faulschlamm belüftet. Die sich dabei am Schlamm bildenden Magnesiumammoniumphosphatkristalle besitzen eine höhere Dichte als amorphe Kalziumphosphate. Bei Anwendung von Verfahren der Schwerkraftentwässerung wird deshalb die Entwässerungsfähigkeit verbessert. Wegen der Drainagewirkung dieser Kristalle wird auch die Entwässerungsfähigkeit bei Anwendung von Verfahren der Filtration verbessert. Zur Umfällung der Kalziumphosphate zu Kalziumkarbonat und Magnesiumammoniumphosphat ist die Anwendung der angegebenen Mindestdosierung notwendig. Der pH-Wert beträgt vorzugsweise 7,5 bis 8. Der Schlamm wird dabei etwa 4 bis 6 Stunden belüftet.

Alternativ werden die Kalziumphosphate unter Belüftung auch mit Eisenund Aluminiumverbindungen zu Metallphosphaten und Kalziumkarbonat umgefällt. Die Entwässerungsfähigkeit wird dabei aber erfahrungsgemäß nicht so gut verbessert, wie bei der Umfällung zu Magnesiumammoniumsphosphat und Kalziumkarbonat. Von Vorteil ist bei der Dosierung von gelösten Magnesiumverbindungen auch der geringere zusätzliche Schlammanfall als bei Anwendung von Eisen- und Aluminiumverbindungen.

Die Emission von Schwefelwasserstoff wird vermindert. Bei der Gewinnung von Phosphaten aus dem Schlammwasser von Kläranlagen mit biologischer Phosphatentfernung werden diese vor der Faulung aus dem Schlammwasser des angefaulten Überschußschlammes nach Abtrennung der Feststoffe gefällt, da dann die Kalziumverbindungen in der anorganischen Matrix des Faulschlammes weitestgehend aus Kalziumkarbonat und nicht aus dem amorphen Kalziumphosphat geringer Dichte bestehen. Zur Umfällung geringer Mengen von Kalziumphosphaten wird der Faulschlamm vor der Entwässerung in bekannter Weise behandelt.

Wenn die Erhöhung des pH-Wertes des Schlammwassers des angefaulten Überschußschlammes nach Dosierung von Magnesiumsalzlösungen zur Fällung der Phosphate wegen der zu geringen Hydrogenkarbonatkonzentration durch Belüftung nicht möglich ist, werden zusätzlich gelöste Karbonate oder Hydrogenkarbonate unter Belüftung dosiert.

### Dazu im einzelnen:

### 3.1

Nach Inbetriebnahme eines Klärwerkes mit biologischer Phosphatentfernung inkrustiert eine Leitung für Faulschlammzentrat infolge eines Anstiegs des pH-Wertes um ungefähr 0,02 bis 0,05 Einheiten des pH-Wertes im Ansaugbereich einer Faulschlammzentratförderpumpe durch hartes kristallines Magnesiumammoniumphosphat so, daß die Förderleistung der Pumpe innerhalb von ungefähr drei Wochen von 60 m³/h auf 15 m³/h vermindert wird. In den Pumpensumpf der Pumpe wird eine Dosierung von ungefähr 0,15 l 37,5%iger Schwefelsäure je m³ Faulschlammzentrat notwendig. Im Zentratablauf der Faulschlammzentrifuge des gleichen Klärwerkes wird die Dosierung von ungefähr 0,6 I 37,5%iger Schwefelsäure je m³ Faulschlammzentrat nötig, um In-krustationen von Magnesiumammoniumphosphat zu vermeiden. Eine Belüftung des Faulschlammes wird nicht installiert. Die Konzentration der gelösten Phosphate im Faulschlammwasser beträgt nach wie vor etwa 150 mg/l. Eine Erhöhung der Konzentration im Ergebnis der Säuredosierung wird nicht festgestellt.

### 3.2.

Nach Inbetriebnahme eines Klärwerkes mit biologischer Phosphatentfernung inkrustieren die Leitungen und Pumpen für die Faulschlamm- und Faulschlammzentratförderung. Zur Vermeidung dieser Inkrustationen werden organische Inkrustationshemmer auf Basis von Polyacrylaten dosiert. Im Faulschlammwasser steigt die Konzentration der gelösten Phosphate von 150 mg/l auf Werte bis zu 300 mg/l infolge der Bindung von Kalzium und Magnesium durch die organischen Verbindungen. Bei der Faulschlammentwässerung in Zentrifugen wird 14 kg Wirksubstanz Polyelektrolyt je t Trockenrückstand Faulschlamm dosiert, um einen entwässerten Faulschlamm von ungefähr 25 % bis 26 % Trockenrückstand zu erhalten.

Nach der Installation einer Belüftungsanlage in einen vorhandenen Faulschlammbehälter zur Erhöhung des pH-Wertes mit dem Ziel der Verminderung des Bedarfs an organischen Inkrustationshemmern wird die Entwässerungsfähigkeit nicht verbessert. Die Umfällung der Kalziumphosphate zu Magnesiumammoniumphosphat und Kalziumkarbonat bei Dosierung von 1 kg bis 1,5 kg Magnesiumchlorid als Lösung je m³ Faulschlamm verringert den Bedarf an Polyelektrolyt bei der Faulschlammentwässerung in der gleichen Zentrifuge auf einen Wert von 6,5 kg bis 7 kg je t Trockenrückstand Faulschlamm. Der Trockenrückstand im entwässerten Faulschlamm steigt auf Werte von 28 % bis 29 %. Ein Verzicht auf den Einsatz der organischen Inkrustationshemmer verbessert die Entwässerungsfähigkeit weiter, da aus den organischen Kalzium- und Magnesiumverbindungen anorganische Verbindungen höherer Dichte werden.

## Patentansprüche

1. Verfahren zur Vermeidung und Beseitigung von Inkrustationen bei der Förderung und Ableitung von Flüssigkeiten, insbesondere Faulschlammwasser, **dadurch gekennzeichnet, daß** in Fließrichtung vor der Faulschlammentwässerung Kohlendioxid bei gleichzeitiger Dosierung von Metallsalzlösungen und Veränderung der Zusammensetzung der Feststoffe im Faulschlammwasser entfernt und anschließend nach der Faulschlammentwässerung vor und nach den Stellen im System, an welchen Erhöhungen des pH-Wertes stattfinden, Säure bei laufendem Betrieb dosiert wird.

2. Verfahren nach dem Anspruch 1, **dadurch gekennzeichnet, daß** die Entfernung des Kohlendioxids unter Belüftung im Behälter oder in Behälterkaskaden kontinuierlich oder diskontinuierlich durchgeführt wird.

3. Verfahren nach den Ansprüchen 1 und 2, **dadurch gekennzeichnet, daß**
als Metallsalzlösungen zwei- oder dreiwertige Eisensalze, Aluminiumsalze oder Magnesiumsalze verwendet werden.

4. Verfahren nach den Ansprüchen 1 bis 3, **dadurch gekennzeichnet, daß**
die pH-Werteinstellung in Abhängigkeit von der Wertigkeit der Metallsalze sowie der Luftmenge und des Aufenthaltszeitraumes im Behälter und in den Behälterkaskaden durchgeführt wird.

5. Verfahren nach den Ansprüchen 1 bis 4, **dadurch gekennzeichnet, daß**
bei dreiwertigen Metallsalzen der pH-Wert im Bereich von 6,9 bis maximal 8 und bei zweiwertigen Metallsalzen der pH-Wert im Bereich von 7,4 bis maximal 8 eingestellt wird.

6. Verfahren nach den Ansprüchen 1 bis 5, **dadurch gekennzeichnet, daß** der Aufenthaltszeitraum im Behälter oder in den Behälterkaskaden mindestens 30 Minuten beträgt.

## Claims

1. Process for preventing and removing scaling while collecting and drawing off liquids, more particularly sludge water, **characterized in that** carbon dioxide is removed upstream of the dehydration of the digested sludge by simultaneous addition of metal salt solutions and alteration of the solid composition in the sludge water, and then, after the dehydration of the digested sludge, acid is added to the system during operation before and after pH increases take place in the system.

2. The process according to claim 1, **characterized in that** the removal of the carbon dioxide is carried out continuously or discontinuously in a tank or in tank cascades using aeration.

3. The process according to claims 1 and 2, **characterized in that** the employed metal salt solutions are bivalent or trivalent iron salts, aluminium salts or magnesium salts.

4. The process according to claims 1 to 3, **characterized in that** the pH adjustment is carried out depending on the valence of the metal salts, as well as of the amount of air and the residence time in the tank and in the tank cascades.

5. The process according to claims 1 to 4, **characterized in that** the pH is adjusted in the range from 6.9 to a maximum of 8 when using trivalent metal salts, and the pH is adjusted in the range from 7.4 to a maximum of 8 when using bivalent metal salts.

6. The process according to claims 1 to 5, **characterized in that** the residence time in the tank or in the tank cascades is at least 30 minutes.

## Revendications

1. Procédé pour la prévention et l'élimination d'entartrage dans la réception et l'évacuation de liquides, et plus particulièrement d'eaux boueuses, **caractérisé en ce qu'**un dioxyde de carbone est éliminé en amont de la déshydratation des boues digérées en ajoutant simultanément des solutions de sels métalliques et en modifiant la composition des matières solides contenues dans les eaux boueuses, de l'acide étant ensuite ajouté au système pendant le fonctionnement et après la déshydratation des boues digérées, l'acide étant ajouté avant et après que des augmentations du pH aient lieu dans le système.

2. Procédé selon la revendication 1, **caractérisé en ce que** l'élimination du dioxyde de carbone est effectuée de manière continue ou discontinue dans un réservoir ou dans des cascades de réservoirs, sous aération.

3. Procédé selon les revendications 1 et 2, **caractérisé en ce que** les solutions de sels métalliques utilisées sont des sels de fer bivalents ou trivalents, des sels d'aluminium, ou des sels de magnésium.

4. Procédé selon les revendications 1 à 3, **caractérisé en ce que** l'ajustement du pH est effectué en fonction de la valence des sels métalliques, ainsi que de la quantité d'air et de la durée de séjour dans le réservoir et dans les cascades de réservoirs.

5. Procédé selon les revendications 1 à 4, **caractérisé en ce que** le pH est ajusté entre 6,9 et un maximum de 8 si des sels métalliques trivalents sont utilisés, et que le pH est ajusté entre 7,4 et un maximum de 8 si des sels métalliques bivalents sont utilisés.

6. Procédé selon les revendications 1 à 5, **caractérisé en ce que** la durée de séjour dans le réservoir ou dans les cascades de réservoirs est d'au moins 30 minutes.
